# EUROPEAN PATENT APPLICATION

(11) **EP 1 632 772 A1**
(43) Date of publication of application: **08.03.2006**
(21) Application number: 05018736.8
(22) Date of filing: 29.08.2005
(51) Int. Cl.: G01N 27/447, B03C 5/00

(54) **Sample analyzing apparatus**

(30) Priority: 02.09.2004 JP 2004255993
(71) Applicant: ENPLAS CORPORATION, Kawaguchi-shi, Saitama 332-0034 (JP)
(72) Inventor: Ohse, Takuhito, Chuo-ku Saitama-shi Saitama 338-0002 (JP); Nakao, Tomoki, Kawaguchi-shi Saitama 333-0866 (JP)
(74) Representative: Manitz, Finsterwald & Partner GbR

(57) **Abstract**

There is provided a sample analyzing apparatus capable of simply and rapidly carrying out each step of electrophoresis, transfer and detection to analyze a substance, such as a biosubstance, in a sample. By sticking an upper plate member 14 to a lower plate member 12 having a fine groove 12a, an electrophoresis passage 13 is formed in the apparatus. A pair of separating electrodes 18 and 20 are provided for moving a substance, such as a biosubstance, along the electrophoresis passage 13 by electrophoresis, and a pair of transferring electrodes 16 and 22 are arranged in the electrophoresis passage 13 for transferring the substance to a capturing material 24 by electrophoresis. After a voltage is applied between the separating electrodes 18 and 20 to carry out electrophoresis, a voltage is applied between the transferring electrodes 16 and 20 to change the direction of electrophoresis to carry out transfer to the capturing material 24, and thereafter, a detecting reaction is allowed in the electrophoresis passage 13 to analyze the substance.

## Description

### BACKGROUND OF THE INVENTION

### Field of the Invention

The present invention generally relates to a sample analyzing apparatus for detecting a charged substance in a sample. More specifically, the invention relates to a sample analyzing apparatus for specifically detecting a biosubstance, such as DNA, RNA or protein.

### Description of the Prior Art

As methods for specifically detecting DNA, RNA and protein, there are known Southern blotting, Northern blotting and Western blotting techniques, respectively. In these techniques, electrophoresis and transfer (blotting) to a capturing (or catching) material are sequentially carried out to detect a target substance by a fluorescence/luminous reagent or an antigen-antibody reaction.

As an example of these techniques, Western blotting technique for specifically detecting protein will be described. Western blotting technique is a. technique for detecting a specific protein from a mixture of proteins by combining the excellent resolution of electrophoresis with the high specificity of an antigen-antibody reaction. First, sodium dodecyl sulfate polyacrylamide gel electrophoresis (SDS-PAGE)or isoelectric focusing electrophoresis is carried out, and then, proteins are electrically moved from a gel to a membrane to be fixed thereto, to prepare a blot (membrane). As examples of such a membrane, there are used nitrocellulose to which proteins are easily bonded and which has a high hydrophobic property, and polyvinylidene defluoride (PVDF) which has a more excellent hydrophobic property. Subsequently, the blot is allowed to react with an antibody to a target protein, to detect the target protein. As examples of such a detecting method, there are a method using an enzyme, a method using fluorescence and so forth. In the method using an enzyme, a secondary antibody labeled with an alkaline phosphatase (AP), horse radish peroxidase (HRP) or the like is allowed to react with a primary antibody to detect a target protein by coloring or chemiluminescence due to enzyme activity. In the detection utilizing chemiluminescence, although it is required to use a scanner capable of detecting exposure to an X-ray film or detecting chemiluminescence, it is easy to detect a very small amount of protein since sensitivity is 10 to 50 times or more as high as that in the coloring method. In the method using fluorescence, quantitative is excellent since fluorescence from a secondary antibody labeled with Cy3 or Cy5 is detected. In such Western blotting technique, gel electrophoresis having an excellent resolution is combined with an antigen-antibody reaction having a high specificity, so that it is possible to clearly detect a very small amount of protein contained a complicated protein solution, such as a cell extract. Therefore, Western blotting technique is utilized for detecting and analyzing a target protein in the various fields of life science.

Thus, in the conventional method for specifically detecting a biosubstance, such as a protein, it is required to carry out electrophoresis and transfer to a capturing material by separate apparatuses, and it is required to acquire skill in the movement of a gel from an electrophoresis apparatus to a transfer apparatus after electrophoresis and in the transfer therein. In addition, the operation time in each step of electrophoresis, transfer and detection is long, so that operations take a great deal of time.

As an apparatus for carrying out both of electrophoresis and transfer, there is proposed an apparatus for horizontallymounting a gel on a platform of a horizontal submarine electrophoresis apparatus, pouring an electrophoresis buffer solution into an electrophoresis bath, carrying out electrophoresis while the gel is soaked in the buffer solution, peeling the gel from the platform to cause the gel to adhere to a transfer membrane, sandwiching them between plate-shaped electrodes to arrange them on the platform, and carrying out electric transfer so that the gel and the transfer membrane are not soaked in the buffer solution (see, e.g., Japanese Patent Laid-Open No. 2000-28578).

However, in the apparatus disclosed in Japanese Patent Laid-Open No. 2000-28578, although it is possible to carry out transfer by utilizing an electrophoresis apparatus, the gel sandwiched between the plate-shaped electrodes must be mounted on the platform again after the gel after electrophoresis is peeled from the platform to adhere to the transfer membrane, so that it remains required to acquire skill in transfer. In addition, the operation time in each step of electrophoresis, transfer and detection remains long, so that operations remain taking a great deal of time.

### SUMMARY OF THE INVENTION

It is therefore an object of the present invention to eliminate the aforementioned problems and to provide a sample analyzing apparatus capable of simply and rapidly carrying out each step of electrophoresis, transfer and detection to analyze a substance, such as a biosubstance, in a sample.

In order to accomplish the aforementioned and other objects, according to one aspect of the present invention, a sample analyzing apparatus comprises: an apparatus body having a passage therein; a capturing material arranged in the passage; a pair of separating electrodes for causing a substance in a sample to move along the passage by electrophoresis; and a pair of transferring electrodes, arranged in the passage, for causing the substance in the sample to be transferred to the capturing material by electrophoresis.

In this sample analyzing apparatus, the apparatus body preferably has a first opening portion which is communicated with one end portion of the passage and which is open to the outside, and a second opening portion which is communicated with the other end portion of the passage and which is open to the outside. The pair of separating electrodes are preferably arranged in the vicinity of the first and second opening portions, respectively. The pair of transferring electrodes may be fixed to the passage, and the capturing material may be arranged between the pair of transferring electrodes. In this case, the capturing material is preferably fixed to one of the pair of transferring electrodes. The pair of transferring electrodes are preferably made of a transparent material.

In the above described sample analyzing apparatus, the passage may comprise a plurality of passage portions substantially extending in parallel. In this case, each of the plurality of passage portions may comprise a separating passage portion, and a pair of transferring passage portions extending along the separating passage portion on both sides thereof, each of the pair of transferring passages having a corresponding one of the pair of transferring electrodes.

In the above described sample analyzing apparatus, the passage may comprise a separating passage portion, and a pair of transferring passage portions extending along the separating passage on both sides thereof, each of the pair of transferring passages having a corresponding one of the pair of transferring electrodes.

According to the present invention, the steps of the electrophoresis of a substance in a sample, the transfer of the substance to a capturing material, and the detection thereof can be carried out in a passage of a body of a sample analyzing apparatus. Therefore, operations can be very simple, so that it is possible to remarkably shorten the time required to carry out each step.

### BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:
FIG. 1 is a perspective view of the first preferred embodiment of a sample analyzing apparatus according to the present invention;
FIG. 2 is a plan view of the sample analyzing apparatus of FIG. 1;
FIG. 3 is a plan view of a lower plate member of the sample analyzing apparatus of FIG. 1;
FIG. 4 is a bottom view of an upper plate member of the sample analyzing apparatus of FIG. 1;
FIG. 5 is a sectional view taken along line V-V of FIG. 2;
FIG. 6 is a sectional view showing a state before the upper plate member of the sample analyzing apparatus of FIG. 1 is put on the lower plate member thereof;
FIG. 7 is an enlarged sectional view of a fine groove of the sample analyzing apparatus, which is taken along line VII-VII of FIG. 2;
FIG. 8 is an enlarged sectional view of a fine groove in a modified example of the first preferred embodiment of a sample analyzing apparatus according to the present invention;
FIG. 9 is an enlarged sectional view of a fine groove in the second preferred embodiment of a sample analyzing apparatus according to the present invention, which is an illustration for explaining a state during electrophoresis;
FIG. 10 is an enlarged sectional view of a fine groove in the second preferred embodiment of a sample analyzing apparatus according to the present invention, which is an illustration for explaining a state during transfer;
FIG. 11 is a plan view of a lower plate member of the third preferred embodiment of a sample analyzing apparatus according to the present invention; and
FIG. 12 is a plan view of an upper plate member of the third preferred embodiment of a sample analyzing apparatus according to the present invention.

### DESCRIPTION OF THE PREFERRED EMBODIMENTS

In the preferred embodiments of a sample analyzing apparatus according to the present invention, one chip has a fine passage (microchannel) for carrying out each step of electrophoresis, transfer to a capturing material, and detection. In this apparatus, after electrophoresis is carried out in the fine passage, the direction of electrophoresis can be changed to carry out transfer to a capturing material, and thereafter, a detecting reaction can be carried out in the fine passage to analyze a substance, such as a biosubstance, in a sample. If each step of the electrophoresis of a substance in a sample, the transfer of the substance to a capturing material, and the detection thereof is thus carried out in a fine passage of one chip, operations can be very simple, so that it is possible to remarkably shorten the time required to carry out each step. Specifically, it is possible to rapidly carry out the electrophoresis of a substance in a sample by using the fine passage, it is possible to simply and sequentially carry out the transfer to a capturing material by changing the direction of electrophoresis after the electrophoresis of the substance, and it is possible to allow a rapid reaction of the substance in the sample with a detecting reagent in the fine passage.

Referring now to the accompanying drawings, the preferred embodiments of a sample analyzing apparatus according to the present invention according to the present invention will be described below in detail.

### [First Preferred Embodiment]

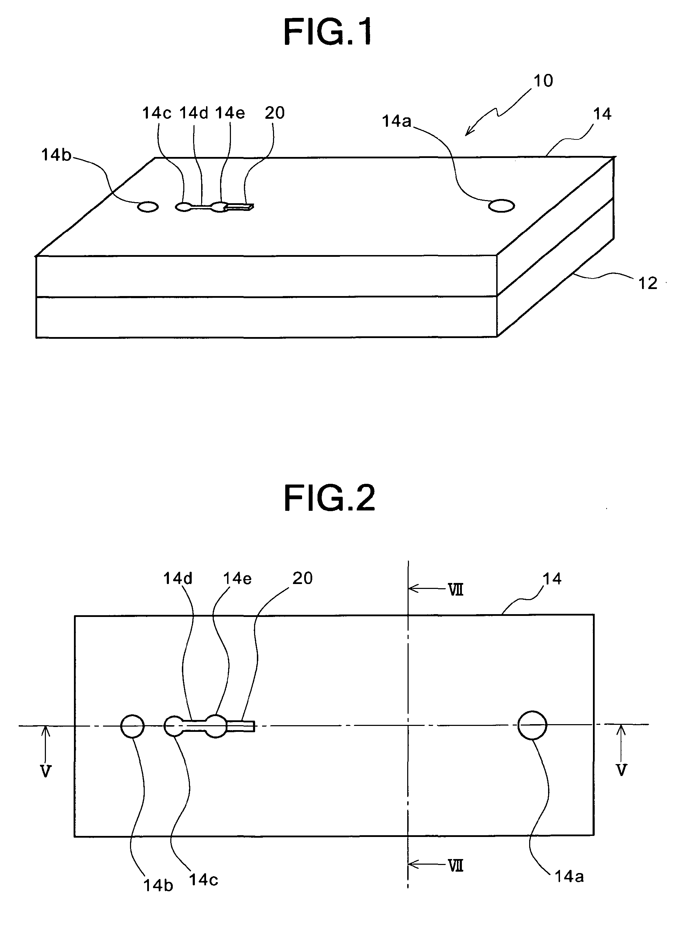

FIGS. 1 through 7 show the first preferred embodiment of a sample analyzing apparatus according to the present invention. As shown in FIG. 1, a sample analyzing apparatus 10 in this preferred embodiment is an apparatus for analyzing a sample containing a biosubstance, such as oligonucleotide, peptide or protein, and comprises a lower plate member 12 and an upper plate member 14, which have a substantially rectangular planar shape and which are put on each other. Each of the lower plate member 12 and upper plate member 14 is made of a resin material, such as polycarbonate (PC) or polymethyl methacrylate (PMMA), or a glass material, and is preferably made of the same material. If these members are made of the same material, the surface charge of the lower plate member 12 can be equal to that of the upper plate member 14. Therefore, the electroendosmosis flow to a substance in a sample during electrophoresis can be uniform, and the flow of the substance in the sample can be constant.

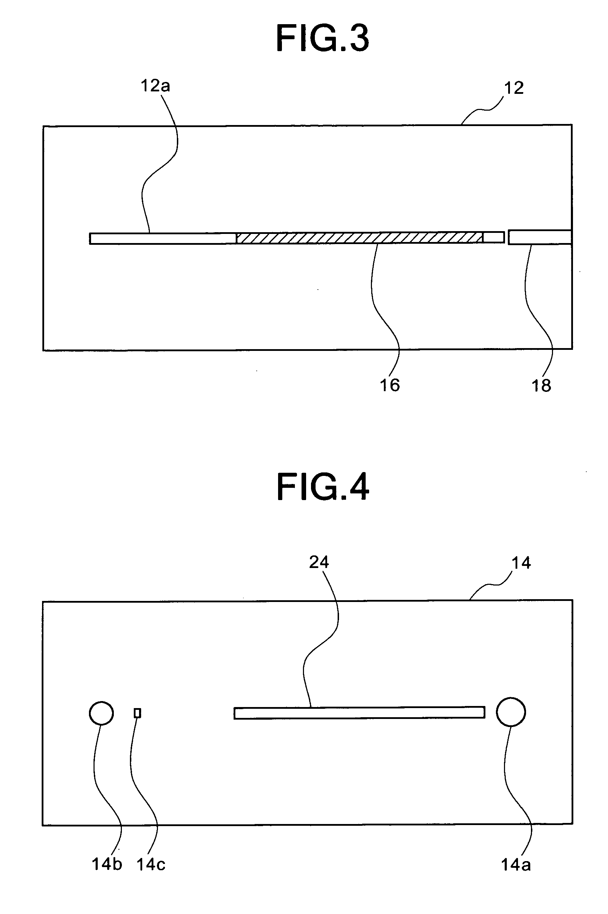

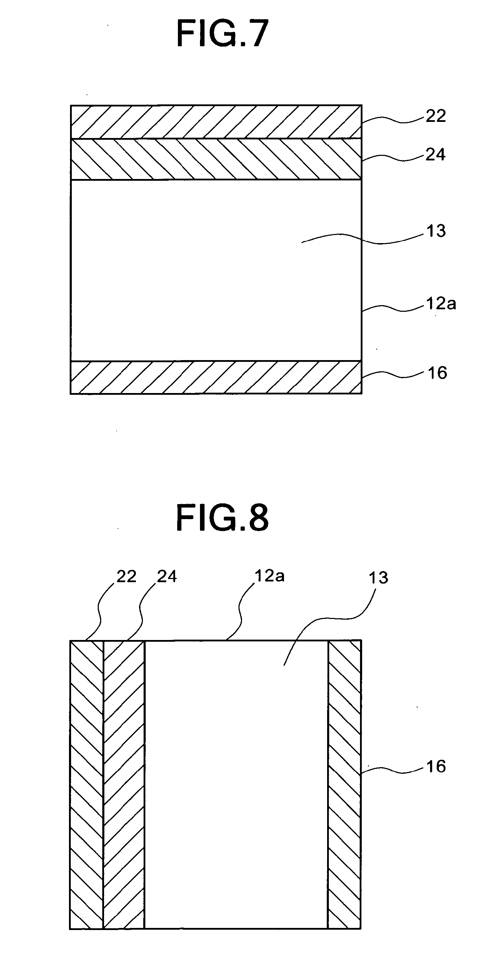

As shown in FIGS. 3, 5 and 6, the lower plate member 12 has an elongated linear fine groove 12a in a substantially central portion of a surface (upper surface) facing the upper plate member 14. The fine groove 12a has a substantially rectangular cross section (see FIG. 7), one side of which has a length of about 50 to 100 *µ* m, and has a length of a few centimeters. On a part of the bottom of the fine groove 12a, a transferring electrode 16 of a transparent conductive material having a thickness of about 0.1 *µ* m is provided. The transferring electrode 16 substantially has the same width of that of the fine groove 12a, and extends along the fine groove 12a. On the upper surface of the lower plate member 12, a separating electrode 18 having a thickness of about 0.1 µ m is provided in the vicinity of one end of the fine groove 12a.

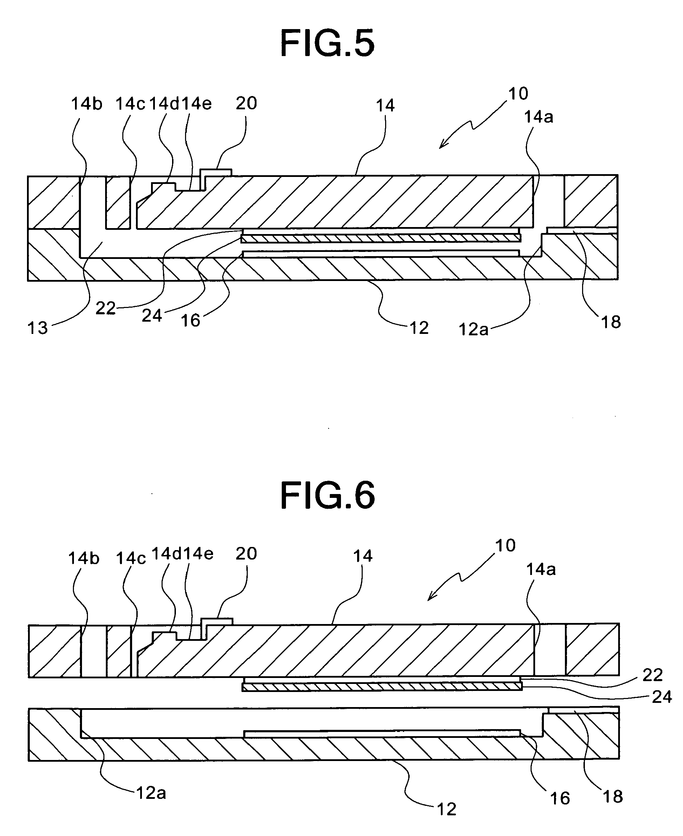

As shown in FIGS. 1, 2, 5 and 6, the upper plate member 14 has a through hole (electrophoresis polymer and reagent inlet/outlet) 14a having a substantially circular cross section, which faces one end of the fine groove 12a and the separating electrode 18 and which is open to the outside. The upper plate member 14 also has a through hole (air vent hole) 14b having a substantially circular cross section, which is communicated with the other end of the fine groove 12a and which is open to the outside. Moreover, the upper plate member 14 has a through hole (sample inlet) 14c which is communicated with a portion of the fine groove 12a in the vicinity of the other end thereof and which is open to the outside. The shape of an opening portion of the through hole 14c being open to the outside is substantially circular, and the substantially circular opening portion is communicated with a substantially circular recessed portion 14e via an elongated fine communication groove 14d. The recessed portion 14e is formed so as to be deeper than the communication groove 14d. On the other hand, the shape of an opening portion of the through hole 14c facing the lower plate member 12 is substantially rectangular and smaller than the opening portion to the outside in order to improve resolution due to electrophoresis (see FIG. 4). Between both of the opening portions, an inclined portion is formed (see FIGS. 5 and 6) . In addition, the upper plate member 14 has a substantially L-shaped separating electrode 20 having a thickness of about 0.1 *µ* m. The separating electrode 20 comprises a portion extending along an inner wall surface of the recessed portion 14e opposite to the communication groove 14d, and a portion extending along the upper surface of the upper plate member 14 (see FIGS. 5 and 6).

As shown in FIGS. 5 and 6, on the reverse (a surface facing the lower plate member 12) of the upper plate member 14, an elongated linear transferring electrode 22 of a transparent conductive material having a thickness of about 0.1 *µ* m is provided so as to face the transferring electrode 16 which is provided in the fine groove 12a of the lower plate member 12. On the surface of the transferring electrode 22 on the side of the lower plate member 12, there is provided a capturing material 24 of a protein absorbing material, such as a nitrocellulose membrane, which substantially has the same shape and size as those of the transferring electrode 22 and which has a thickness of a few micrometers (see FIGS. 4 through 6). Furthermore, as the capturing material 24, a material or fine network structure, such as a coating material, capable of capturing a target substance by absorption or the like, may be used in place of a membrane, such as a nitrocellulose membrane .

By sticking the above described lower plating member 12 and upper plate member 14 to each other by means of an adhesive or the like, the opening portion of the fine groove 12a is closed by the upper plate member 14 to form an electrophoresis passage 13, so that the sample analyzing apparatus 10 in this preferred embodiment shown in FIGS. 1 and 5 can be produced.

A method for analyzing a biosubstance using the above described sample analyzing apparatus 10 in this preferred embodiment will be described below.

First, an electrophoresis buffer is filled in the through hole 14c, communication groove 14d and recessed portion 14e, and thereafter, the electrophoresis buffer is injected from the inlet/outlet 14a to be filled in the electrophoresis passage 13. Then, a sample containing a biosubstance charged to negative is injected from the sample inlet 14c, and thereafter, a voltage is applied between the separating electrodes 18 and 20 to carry out electrophoresis to separate the biosubstance in a longitudinal range of the transferring electrodes 16 and 22 on the basis of a difference in molecular weight. Then, the application of the voltage between the separating electrodes 18 and 20 is stopped, and thereafter, a voltage is applied between the transferring electrodes 16 and 22 to change the direction of electrophoresis to a vertical direction to transfer the separated biosubstance to the capturing material 24. Then, the electrophoresis buffer is discharged from the electrophoresis passage 13, and thereafter, a cleaning buffer is injected from the inlet/outlet 14a to clean the capturing material 24, and the cleaning buffer is discharged. Then, a blocking solution for carrying out a treatment (blocking treatment) for preventing a reaction, such as a nonspecific bonding, between the biosubstance on the capturing material 24 and an antibody, which will be described later, is injected to carry out a blocking treatment, and thereafter, the blocking solution is discharged. Then, a cleaning buffer is injected from the inlet/outlet 14a to clean the capturing material 24, and the cleaning buffer is discharged. Then, the antibody is injected from the inlet/outlet 14a to allow a reaction, and thereafter, the antibody is discharged. Then, a cleaning buffer is injected from the inlet/outlet 14a to clean the capturing material 24, and the cleaning buffer is discharged. Subsequently, a secondary antibody is injected to allow a reaction, and thereafter, cleaning is carried out. Thereafter, a detecting reagent is injected, and finally, a target substance (band) is detected by scanning. The discharge of liquid at a series of analyzing steps can be carried out by the application of pressure or suction using one or more of the through holes 14a, 14b and 14c of the upper plate member 14.

Thus, the sample analyzing apparatus in this preferred embodiment has a separating mechanism for separating a biosubstance, such as oligonucleotide, peptide or protein, by electrophoresis, a transfer mechanism for transferring the biosubstance to a capturing material, and a detection mechanism for detecting a target substance by a colorimetry, fluorescence or luminous reagent, or antigen-antibody reaction. Therefore, operations can be very simple, so that it is possible to remarkably shorten the time required to carry out each step.

FIG. 8 shows an enlarged cross section of an electrophoresis passage in a modified example of the first preferred embodiment of a sample analyzing apparatus according to the present invention. In the above described first preferred embodiment, as shown in FIG. 7, the transferring electrode 16 is provided on the bottom of the fine groove 12a of the lower plate member 12, and the transferring electrode 22 is provided on the reverse (the surface facing the lower plate member 12) of the upper plate member 14 so as to face the transferring electrode 16. In addition, the capturing material 24 is provided on the transferring electrode 22, so that the transferring voltage is applied in vertical directions of the electrophoresis passage 13. In this modified example, as shown in FIG. 8, the pair of transferring electrodes 16 and 22 are provided on the side faces of the electrophoresis passage 13 facing each other, and the capturing material 24 is provided on the transferring electrode 22, so that a transferring voltage is applied in lateral directions of the electrophoresis passage 13 in the figure. Other constructions are the same as those in the above described first preferred embodiment. With such constructions, it is possible to detect fluorescence or the like from a target substance by irradiating the electrophoresis passage 13 with light in vertical directions in the figure, even if the transferring electrodes 16 and 22 are not made of a transparent conductive material.

Furthermore, in order to effectively carry out the irradiation of light to facilitate the detection of fluorescence or the like from a target substance, the upper plate member 14 and/or the lower plate member 12 may have a light control mechanism (a condensing/optical path changing mechanism based on lens or prism), and/or a light diffusion mechanism (a mechanism obtained by causing an interface to at least one different material, through which light passes, to have a rough surface).

### [Second Preferred Embodiment]

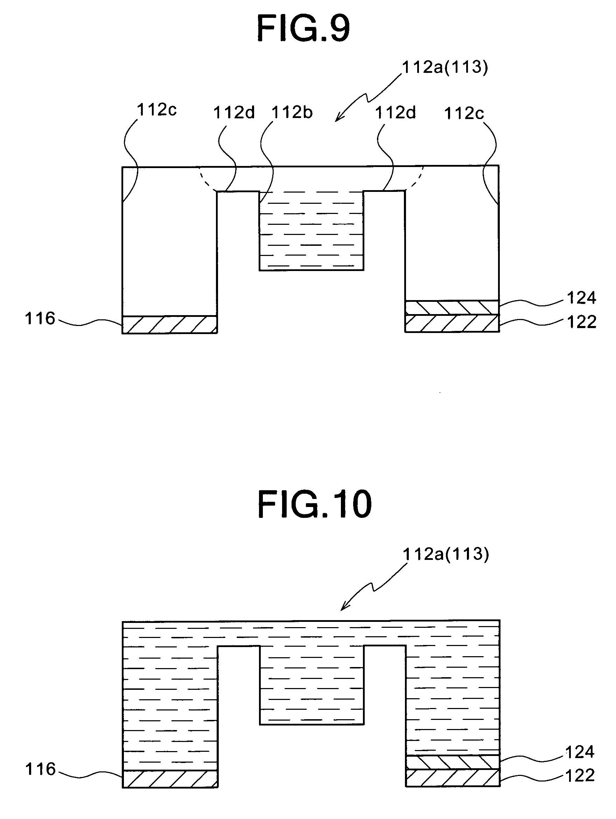

FIGS. 9 and 10 show an enlarged cross section of a fine groove in the second preferred embodiment of a sample analyzing apparatus according to the present invention. Since this preferred embodiment is the same as the above described first preferred embodiment, except for the shape of a fine groove 112a and the arrangement of transferring electrodes 116, 122 and capturing material 124, different constructions from those in the first preferred embodiment will be described to omit the description of other constructions.

As shown in FIG. 9, the fine groove 112a (electrophoresis passage 113) in this preferred embodiment comprises an elongated linear separating groove portion 112b formed in a lower plate member (not shown) which is substantially the same as the lower plate member 12 in the first preferred embodiment, a pair of elongated linear transferring groove portions 112c which are formed on both sides of the separating groove portion 112b in parallel thereto, and a pair of communication portions 112d for establishing a communication between each of the transferring groove portions 112c and the separating groove portion 112b.

Similar to the fine groove 12a in the above described first preferred embodiment, the separating groove portion 112b is formed in a substantially central portion of a surface (upper surface) of the lower plate member (not shown) facing the upper plate member (not shown), and has a substantially rectangular cross section, one side of which has a length of about 50 to 100 µ m, and a length of a few centimeters.

Each of the transferring groove portions 112c substantially has the same width as that of the separating groove portion 112b, and is deeper and shorter than the separating groove portion 112b. On the bottom of one of the transferring groove portions 112c, a transferring electrode 116 having a thickness of about 0.1 *µ* m is provided. On the bottom of the other transferring groove portion 112c, a transferring electrode 122 having a thickness of about 0.1 µ m is provided. Each of the transferring electrodes 116 and 122 substantially has the same width as that of a corresponding one of the transferring groove portions 112c, and extends along the corresponding one of the transferring groove portions 112c over the substantially overall length thereof. On the transferring electrode 122, similar to the first preferred embodiment, there is provided a capturing material 124 of a protein absorbing material, such as a nitrocellulose membrane, which substantially has the same shape and size as those of the transferring electrode 122 and which has a thickness of a few micrometers.

Each of the communication portions 112d substantially has the same length as that of a corresponding one of the transferring groove portions 112c, and has such a fine depth that an electrophoresis polymer filled in the separating groove portion 112b during electrophoresis do not enter the corresponding one of the transferring groove portions 112c by surface tension as shown by dotted lines on the boundary portions between the transferring groove portions 112c and the communication portions 112d in FIG. 9.

When the sample analyzing apparatus in the above described preferred embodiment is used for analyzing a biosubstance, the separating groove portion 112b is filled with an electrophoresis polymer as shown in FIG. 9, and a voltage is applied between the pair of separating electrodes (not shown) to carry out electrophoresis. Thereafter, as shown in FIG. 10, the transferring groove portions 112c are filled with the electrophoresis buffer, and a voltage is applied between the transferring electrodes 112 and 116 to carry out transfer to the capturing material 124. Then, a detecting reaction is allowed in the fine groove 112a to analyze the biosubstance.

The sample analyzing apparatus in this preferred embodiment can obtain the same advantageous effects as those in the above described first preferred embodiment.

### [Third Preferred Embodiment]

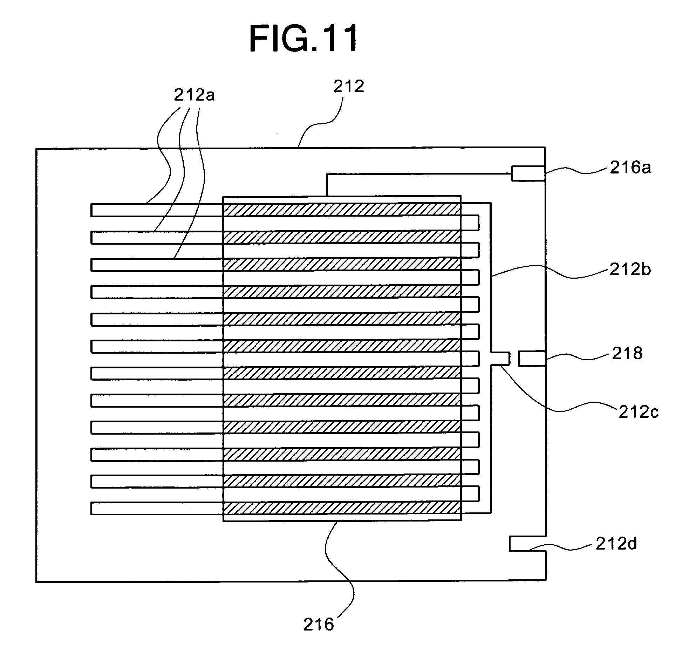

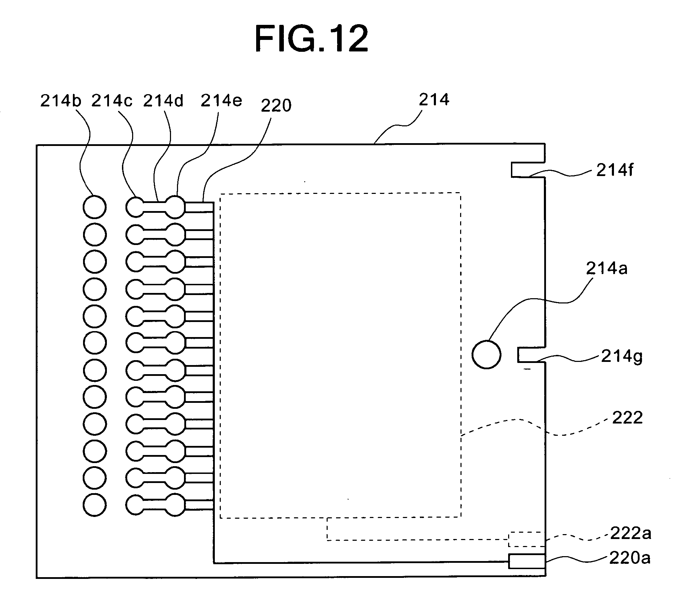

FIGS. 11 and 12 show the third preferred embodiment of a sample analyzing apparatus according to the present invention. This preferred embodiment is the same as the above described first preferred embodiment, except that a plurality of fine grooves 212a are formed. Therefore, different constructions from those in the first preferred embodiment will be described to omit the description of other construction.

As shown in FIG. 11, in a surface (upper surface) of a lower plate member 212 in this preferred embodiment facing an upper plate member 214 shown in FIG. 12, a plurality of elongated linear fine grooves (electrophoresis passages) 212a are formed so as to extend in parallel. One end of each of the fine grooves 212a is communicated with one ends of the other fine grooves 212a by a fine groove 212b which extends in a direction perpendicular to the fine grooves 212a. The substantially central portion of the fine groove 212b is communicated with a fine groove 212c which projects in the opposite direction to the fine grooves 212a. Similar to the above described first preferred embodiment, each of the fine grooves 212a has a substantially rectangular cross section, one side of which has a length of about 50 to 100 µ m, and has a length of a few centimeters. Similarly, the fine grooves 212b and 212c have a substantially rectangular cross section, one side of which has a length of about 50 to 100 µ m.

As shown in FIG. 11, a transferring electrode 216 of a transparent conductive material having a thickness of about 0. 1 µ m is provided so as to cross and cover all of the fine grooves 212a, and is designed to be exposed only to the bottom of each of the fine grooves 212a by applying an insulating material on portions other than the bottom of each of the fine grooves 212a. The transferring electrode 216 is designed to be connected to a power supply (not shown) via a terminal 216a which is provided on the peripheral portion of the lower plate member 212. On the upper surface of the lower plate member 212, a separating electrode 218 having a thickness of about 0.1 *µ* m is provided in the vicinity of the fine groove 212c. In the peripheral portion of the lower plate member 212, a cut-out portion 212d for exposing a terminal 220a of a separating electrode 220, which is provided on the upper plate member 214 as will be described later, to the outside when the upper plate member 214 is put on the lower plate member 212.

As shown in FIG. 12, the upper plate member 214 has a through hole (electrophoresis polymer and reagent inlet/outlet) 214a having a substantially circular cross section, which faces the fine groove 212c and the separating electrode 218 and which is open to the outside. The upper plate member 214 also has a plurality of through holes (air vent holes) 214b, each of which has a substantially circular cross section, and each of which is communicated with the other end of a corresponding one of the fine grooves 212a and is open to the outside. Moreover, the upper plate member 214 has a plurality of through holes (sample inlets) 214c each of which is communicated with a portion of a corresponding one of the fine grooves 212a in the vicinity of the other end thereof and which is open to the outside. The shape of an opening portion of each of the through holes 214c being open to the outside is substantially circular, and the substantially circular opening portion is communicated with a corresponding one of substantially circular recessed portions 214e via a corresponding one of elongated fine communication grooves 214d. Each of the recessed portions 214e is formed so as to be deeper than the corresponding one of the communication grooves 214d. On the other hand, similar to the above described first preferred embodiment, the shape of an opening portion (not shown) of each of the through holes 214c facing the lower plate member 212 is substantially rectangular and smaller than the opening portion to the outside, and an inclined portion (not shown) is formed between both of the opening portions. In addition, similar to the above described first preferred embodiment, the upper plate member 214 has a plurality of substantially L-shaped separating electrodes 220 having a thickness of about 0.1 µ m. Each of the separating electrodes 220 comprises a portion extending along an inner wall surface of a corresponding one of the recessed portions 214e opposite to a corresponding one of the communication grooves 214d, and a portion extending along the upper surface of the upper plate member 214. The separating electrodes 220 are designed to be connected to a power supply (not shown) via a terminal 220a which is provided on the peripheral portion of the upper plate member 214.

On the reverse (a surface facing the lower plate member 212) of the upper plate member 214, a transferring electrode 222 (shown by dotted lines in FIG. 12) having a thickness of about 0.1 *µ* m is provided so as to face the transferring electrode 216 which is provided on the lower plate member 212. The transferring electrode 222 is designed to be connected to a power supply (not shown) via a terminal 222a (shown by dotted lines in FIG. 12) which is provided on the peripheral portion of the upper plate member 214. Similar to the above described first preferred embodiment, on the surface of the transferring electrode 222 on the side of the lower plate member 212, there is provided a capturing material (not show) of a protein absorbing material, such as a nitrocellulose membrane, which substantially has the same shape and size as those of the transferring electrode 222 and which has a thickness of a few micrometers.

Furthermore, each of the electrophoresis passages may be separately provided with the above described transferring electrodes 216, 222 and capturing material. That is, the transferring electrodes 216, 222 and capturing material in this preferred embodiment may have the same shape as that of the transferring electrode 16, 22 and capturing material 24 in the above described first preferred embodiment.

Moreover, the peripheral portion of the upper plate member 214 has cut-out portions 214f and 214g for exposing the terminal 216a of transferring electrode 216 and separating electrode 218, which are provided on the lower plate member 212, to the outside, respectively.

By sticking the above described lower plating member 212 and upper plate member 214 to each other by means of an adhesive or the like, the sample analyzing apparatus in this preferred embodiment can be produced.

The sample analyzing apparatus in this preferred embodiment can obtain the same advantageous effects as those in the above described first preferred embodiment. In addition, since the plurality of fine grooves 212a are provided, it is possible to simultaneously detect a plurality of target substances, so that it is possible to more rapidly detect the plurality of target substances than the first and second preferred embodiment.

In the above described first through third preferred embodiments, substances to be analyzed should not be limited to biosubstances, and may be charged substances capable of being separated by electrophoresis. In addition, while the direction of transfer after the separation of the biosubstance has been perpendicular to the direction of electrophoresis for separation in the above described first through third preferred embodiments, the direction of transfer should not be limited to such a direction, but it may be a different direction from the direction of electrophoresis for separation. Moreover, in the above described first through third preferred embodiments, the shape of cross section, width and depth of the groove formed in the lower plate member should not be limited to the above described shape of cross section and so forth. For example, in the above described first through third preferred embodiments, the shape of the cross section of the groove (the shape of the cross section corresponding to that in FIGS. 7 and 8) should not be limited to be rectangular, and may be trapezoidal, triangular or circular if it does not prevent electrophoresis.

## Claims

1. A sample analyzing apparatus comprising:
an apparatus body having a passage therein;
a capturing material arranged in said passage;
a pair of separating electrodes for causing a substance in a sample to move along said passage by electrophoresis; and
a pair of transferring electrodes, arranged in said passage, for causing the substance in the sample to be transferred to said capturing material by electrophoresis.

2. A sample analyzing apparatus as set forth in claim 1, wherein said apparatus body has a first opening portion which is communicated with one end portion of said passage and which is open to the outside, and a second opening portion which is communicated with the other end portion of said passage and which is open to the outside.

3. A sample analyzing apparatus as set forth in claim 2, wherein said pair of separating electrodes are arranged in the vicinity of said first and second opening portions, respectively.

4. A sample analyzing apparatus as set forth in claim 1, wherein said pair of transferring electrodes are fixed to said passage, and said capturing material is arranged between said pair of transferring electrodes.

5. A sample analyzing apparatus as set forth in claim 4, wherein said capturing material is fixed to one of said pair of transferring electrodes.

6. A sample analyzing apparatus as set forth in claim 1, wherein said pair of transferring electrodes are made of a transparent material.

7. A sample analyzing apparatus as set forth in claim 1, wherein said passage comprises a plurality of passage portions substantially extending in parallel.

8. A sample analyzing apparatus as set forth in claim 1, wherein said passage comprises a separating passage portion, and a pair of transferring passage portions extending along said separating passage on both sides thereof, each of said pair of transferring passages having a corresponding one of said pair of transferring electrodes.

9. A sample analyzing apparatus as set forth in claim 7, wherein each of said plurality of passage portions comprises a separating passage portion, and a pair of transferring passage portions extending along said separating passage portion on both sides thereof, each of said pair of transferring passages having a corresponding one of said pair of transferring electrodes.
